# EUROPEAN PATENT SPECIFICATION

(11) **EP 4 444 996 B1**
(45) Date of publication and mention of the grant of the patent: **10.06.2026**
(21) Application number: 22843125.0
(22) Date of filing: 06.12.2022
(51) Int. Cl.: F01K 3/12

(54) **SYSTEM FOR STORING AND USING THERMAL ENERGY**
SYSTEM ZUR SPEICHERUNG UND VERWENDUNG VON WÄRMEENERGIE
SYSTÈME DE STOCKAGE ET D'UTILISATION D'ÉNERGIE THERMIQUE

(30) Priority: 09.12.2021 IT 202100030965
(43) Date of publication of application: 16.10.2024
(73) Proprietor: NUOVO PIGNONE TECNOLOGIE - S.R.L., 50127 Florence (IT)
(72) Inventor: KOSAMANA, Bhaskara, Bangalore Rural 562114, Karnataka (IN); MAVURI, Rajesh, Bangalore 560067, Karnataka (IN)
(74) Representative: Novagraaf Group
(86) International application number: PCT/EP2022/025554
(87) International publication number: WO 2023/104333

(56) References cited:
- EP-A1- 2 312 129
- DE-A1- 102019 127 431
- US-A1- 2018 187 597

## Description

### TECHNICAL FIELD

The subject-matter disclosed herein relates to systems for storing thermal energy and afterwards using the stored thermal energy to generate electrical energy.

### BACKGROUND ART

In order to mitigate climate change impacts, one of the global trends is to replace non-renewable sources, such as fossil fuels, with renewable sources, such as solar and wind power. However, renewable sources have the disadvantage to be intermittent sources and therefore not always available for the production of electrical energy.

Energy storage is seen as an enabling technology with the potential to reduce the intermittency and variability of renewable sources. Using energy storage, the energy is stored when excess power is available (i.e. when electrical energy demand is lower than electrical energy production) and used when energy is needed (i.e. when electrical energy production is needed but the energy source is not available or is insufficiently available).

From patent document US10443452B2 there is known a pumped thermal energy storage system comprising a compressor, a turbine and two counterflow heat exchangers, each one being fluidly coupled to a thermal storage made by two tanks, a first tank storing high-temperature storage fluid and a second tank storing low-temperature storage fluid. The pumped thermal energy storage system can store energy by operating as a heat pump and extract energy by operating as a heat engine. When the system stores energy, a first heat exchanger receives low-temperature storage fluid from a first tank and heats it, so that hot storage fluid exiting from the first heat exchanger is stored in a second tank, and a second heat exchanger receives high-temperature storage fluid from a third tank and cools it, so that cold storage fluid exiting from the second heat exchanger is stored in a fourth tank. When the system extract energy, the first heat exchanger receives high-temperature storage fluid from the first tank and cools it, so that cold storage fluid exiting from the first heat exchanger is stored in the second tank, and the second heat exchanger receives cold storage fluid from the third tank and heats it, so that hot storage fluid exiting from the second heat exchanger is stored in the fourth tank. US 2018/187597 A1 discloses modular thermal storage. DE 10 2019 127431 A1 discloses a thermal energy storage system.

### SUMMARY

It would be desirable to have a storage thermal energy system which is simple and efficient; a small footprint would also be desirable.

The present invention is defined in the accompanying claims. According to an aspect, the subject-matter disclosed herein relates to a system for storing and using thermal energy which has two storage tanks, a first tank to store heat-storage fluid at low temperature and a second tank to store heat-storage fluid at high temperature. The system may work alternatively in a first operating condition, i.e. as a heat pump, to heat the heat-storage fluid at low temperature by consuming electrical energy and store it in the second tank and in a second operating condition, i.e. as a heat engine, to produce electrical energy by cooling the heat-storage fluid at high temperature and store it in the first tank.

Advantageously, the system comprises two heat exchangers, in particular a condenser and an evaporator; the condenser is configured to transfer heat from a working fluid to the heat-storage fluid when the system works as a heat pump and to an external fluid stream, for example ambient air, when the system works as a heat engine and the evaporator is configured to transfer heat from the heat-storage fluid to a working fluid when the system works as a heat engine and to an external fluid stream, for example ambient air, when the system works as a heat pump.

### BRIEF DESCRIPTION OF THE DRAWINGS

A more complete appreciation of the disclosed embodiments of the invention and many of the attendant advantages thereof will be readily obtained as the same becomes better understood by reference to the following detailed description when considered in connection with the accompanying drawings, wherein:
Fig. 1 shows a simplified diagram of a first embodiment of a system for storing and using thermal energy,
Fig. 2 shows the system of Fig. 1 in a first operating condition (charge cycle),
Fig. 3 shows the system of Fig. 1 in a second operating condition (discharge cycle),
Fig. 4 shows a simplified diagram of a second embodiment of a system for storing and using thermal energy,
Fig. 5 shows a simplified diagram of the system of Fig. 4 with an additional heat unit, and
Fig. 6 shows a simplified diagram of the system of Fig. 4 with a second closed-loop cycle arrangement.

### DETAILED DESCRIPTION OF EMBODIMENTS

According to an aspect, the subject-matter disclosed herein relates to a system for storing and using thermal energy which can work alternatively in two different operation conditions: as a heat pump (or charging condition), consuming electrical energy to heat and store heat-storage fluid at high temperature in a second tank, and as a heat motor (or discharging condition), generating electrical energy by using the heat-storage fluid from the second tank, cooling and storing heat-storage fluid at low temperature in a first tank. The first tank and the second tank are both fluidly coupled to a first or a second heat exchanger depending on the operation condition of the system: a first heat exchanger, which works as a condenser, is arranged to transfer heat to the heat-storage fluid flowing from the first tank to the second tank in the charging condition and a second heat exchanger, which works as an evaporator, is arranged to transfer heat from the heat-storage fluid flowing from the second tank to the first tank in the discharging condition. Advantageously, the system works in the charging condition when excess power is available and in the discharging condition when energy is needed.

Reference now will be made in detail to embodiments of the disclosure, an example of which is illustrated in the drawings. The example is provided by way of explanation of the disclosure, not limitation of the disclosure. In the following description, similar reference numerals are used for the illustration of figures of the embodiments to indicate elements performing the same or similar functions. Moreover, for clarity of illustration, some references may be not repeated in all the figures.

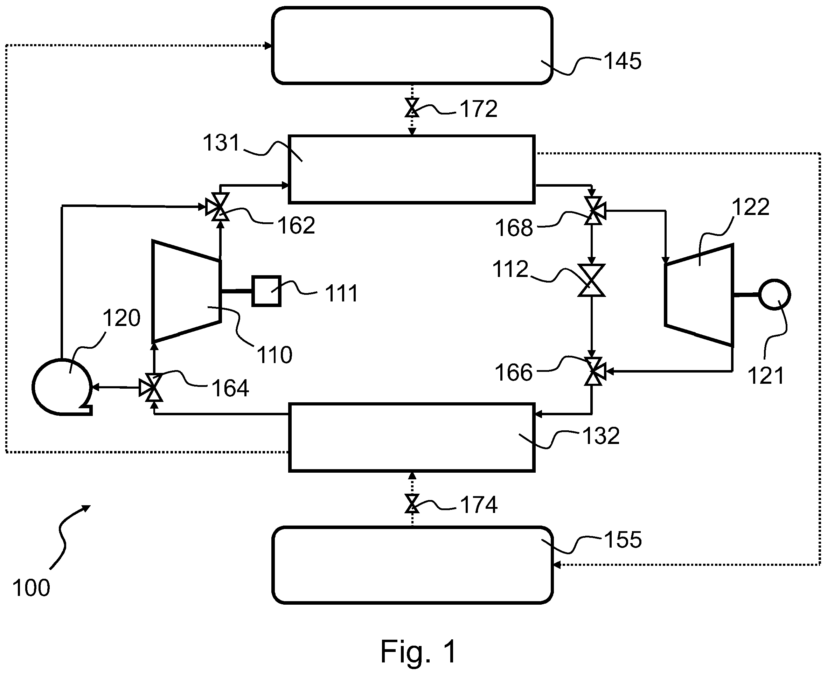

In Figure 1 there is schematically shown a diagram of a first embodiment of a system for storing and using thermal energy generally indicated with reference numeral 100. The system 100 comprises a first closed-loop arrangement (see the dotted line in Fig. 1) comprising a first tank 145 and a second tank 155. The first tank 145 and the second tank 155 are arranged to store a heat-storage fluid, in particular the same heat-storage fluid: the first tank 145 is arranged to store heat-storage fluid at a first temperature, in particular a low temperature, and the second tank 155 is arranged to store heat-storage fluid at a second temperature, in particular a high temperature. In other words, the second temperature is higher than the first temperature. For example, the first temperature could be around 120°C (more generally in the exemplary range 80-200°C) and the second temperature could be around 400°C (more generally in the exemplary range 200-600°C). Preferably, heat-storage fluid of the first tank 145 and heat-storage fluid of the second tank 155 are the same fluid, for example diathermic oil, heavy oil such as Theminol VP-1 or Dowtherm A, molten salt, such as sodium nitrate (NaNO3) or potassium nitrate (KNO3), or a mixture of molten salts.

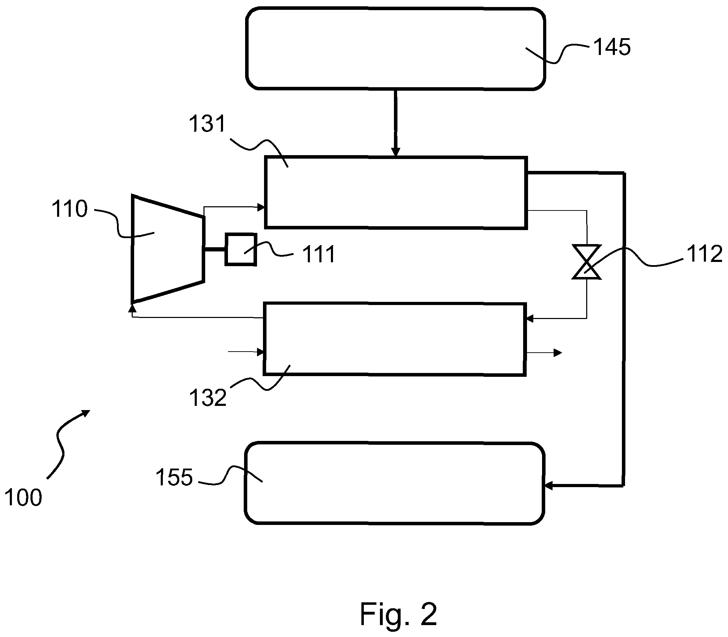

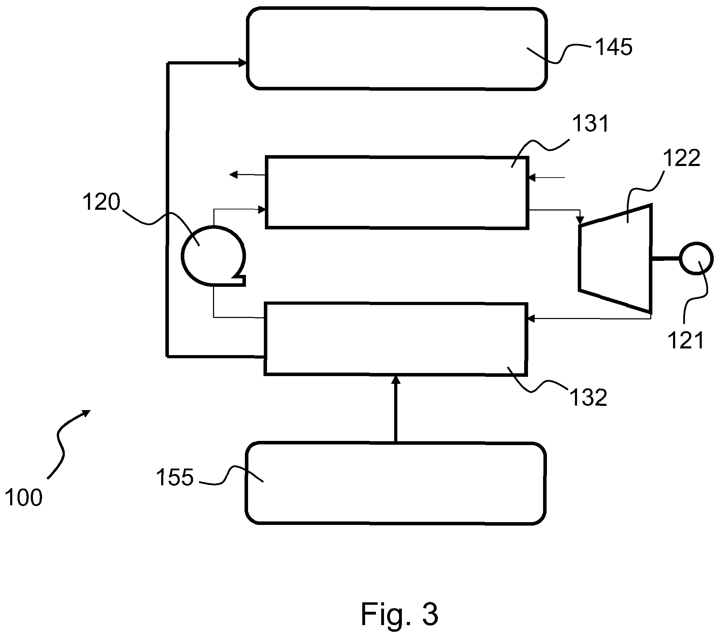

As it will be apparent from the following, the first closed-loop cycle arrangement is configured to flow heat-storage fluid from the first tank 145 to the second tank 155 in a first operating condition (see for example Fig. 2) and to flow heat-storage fluid from the second tank 155 to the first tank 145 in a second operating condition (see for example Fig. 3). In particular, when the closed-loop cycle works in the first operating condition, the system 100 consumes electrical energy to store hot heat-storage fluid in the second tank 155 and when the closed-loop cycle works in the second operating condition, the system 100 generates electrical energy by using the hot heat-storage fluid of the second tank 155.

The first closed-loop cycle arrangement may comprise further a first valve 172 and a second valve 174 configured to switch alternatively between an open configuration and a closed configuration. In particular, when the first valve 172 is in the open configuration, the heat-storage fluid of the first closed-loop cycle arrangement can fluid from the first tank 145 to the second tank 155, and when the second valve 174 is in the open configuration, the heat-storage fluid of the first closed-loop cycle arrangement can fluid from the second tank 155 to the first tank 145. Preferably, when the first valve 172 is in the open configuration, the second valve 174 is in the closed configuration and when the second valve 174 is in the open configuration, the first valve 172 is in the closed configuration. In other words, when the first valve 172 is in the open configuration and the second valve 174 is in the closed configuration then the first closed-loop cycle arrangement is in the first operating condition, and when the first valve 172 is in the closed configuration and the second valve 174 is in the open configuration then the first closed-loop cycle arrangement is in the second operating condition.

Advantageously, the first tank 145 and the second tank 155 comprise two or more sections to store the heat-storage fluid. In particular, each section of the first tank 145, as well as each section of the second tank 155, may be fluidly decoupled (i.e. each section is independent), so that each section of the first tank 145, as well as each section of the second tank 155, may be charged/discharged with a partial amount of heat-storage fluid with respect to the total amount of heat-storage fluid circulating in the first closed-loop arrangement. It is to be noted that 8 of the first tank 145 and each section of the second tank 155 may be configured to store different partial amounts of heat-storage fluid or the same partial amount. Advantageously, as it will better explained in the following, the charging/discharging of each section is controlled by a control system (not shown in any figures). As a non-limiting example, the control unit could be a computer, programmable controller, microprocessor or similar device.

In particular, each section of the first tank 145 may be fluidly coupled to each section of the second tank 155, for example through a dedicated pipe. As a non-limiting example, when the system 100 works in the first operating condition (charge cycle), the heat-storage fluid flows from a first section of the first tank 145 to a first section of the second tank 155 (exchanging heat during the flowing, as it will better explained in the following). In particular the first tank 145 and the second tank 155 may be fluidly coupled through at least one pipe. Advantageously, each end of the pipe is provided with a multiway valve having a plurality of ports, each port being fluidly coupled to a different section of the respective tank 145 and 155 so that, for example, a first section of the first tank 145 and a first section of the second tank 155 may be charged/discharged independently from the other sections of the tanks 145 and 155. In particular, the control system may control the operation of the multiway valve in order to control which section of the first tank 145 and which section of the second tank 155 are fluidly coupled.

According to the embodiment of Fig. 1, system 100 comprises further any or both of:
- a second thermodynamic cycle arrangement configured to heat the heat-storage fluid flowing from the first tank 145 to the second tank 155 by consuming first electrical energy, the electrical energy being input to the system 100, and
- a third thermodynamic cycle arrangement configured to produce second electrical energy by cooling the heat-storage fluid flowing from the second tank 155 to the first tank 145, the second electrical energy being output from the system 100.
In other words, the second thermodynamic cycle arrangement is configured to work when the first closed-loop cycle arrangement is in the first operating condition (see for example Fig. 2) and the third thermodynamic cycle arrangement is configured to work when the first closed-loop cycle arrangement is in the second operating condition (see for example Fig. 3).

The second thermodynamic cycle arrangement may be arranged to circulate a first working fluid; in particular, the first working fluid is pentafluoroethane or pentafluoropropane or carbon dioxide or cyclopentane.

The third thermodynamic cycle arrangement may be arranged to circulate a second working fluid; in particular, the first working fluid is pentafluoroethane or pentafluoropropane or carbon dioxide or cyclopentane.

Preferably, according to the preferred embodiment shown in Fig. 1, the second thermodynamic cycle arrangement and the third thermodynamic cycle arrangement are arranged to circulate the same working fluid.

Advantageously, with non-limiting reference to Fig. 1, the second thermodynamic cycle arrangement and the third thermodynamic cycle arrangement are fluidly coupled. In particular, the second thermodynamic cycle arrangement and the third thermodynamic cycle arrangement share a valve arrangement which comprises three-way valves 162, 164, 166, 168 (see for example the four three-way valves in Fig. 1).

The three-way valves 162, 164, 166, 168 are arranged to switch the first closed-loop cycle arrangement between the first operating condition and the second operating condition; in particular, the three-way valves 162, 164, 166, 168 are arranged to deviate the first or second working fluid to flow in at least a portion of the second thermodynamic cycle arrangement or at least a portion of the third thermodynamic cycle arrangement. For example, in the first operating condition shown in Fig. 2, the three-way valves 162, 164, 166, 168 are arranged so that the working fluid is deviated to flow in the second thermodynamic cycle arrangement and in the second operating condition shown in Fig. 3, the three-way valves 162, 164, 166, 168 are arranged so that the working fluid is deviated to flow in the third thermodynamic cycle arrangement.

The system 100 comprises a first heat exchanger 131, in particular a condenser, configured to be fluidly coupled to the first tank 145 and the second tank 155 when the first closed-loop arrangement is in the first operating condition and a second heat exchanger 132, in particular an evaporator, configured to be fluidly coupled to the first tank 145 and the second tank 155 when the first closed-loop arrangement is in the second operating condition. It is to be noted that the second thermodynamic cycle arrangement comprises the first heat exchanger 131 and the third thermodynamic cycle arrangement comprises the second heat exchanger 132; however, as it will be better described in the following, the second thermodynamic cycle arrangement and the third thermodynamic cycle arrangement may share the first heat exchanger 131 and the second heat exchanger 132. Advantageously, during each operating condition, only one heat exchanger 131 or 132 of the system 100 is fluidly coupled to the first and the second tank 145 and 155. Preferably, a valve 172 is located between the first tank 145 and the first heat exchanger 131 and a valve 174 is located between the second tank 155 and the second heat exchanger 132, the valves 172, 174 being arranged to switch between an open configuration and a closed configuration. Preferably, when the first closed-loop arrangement is in the first operating condition the valve 172 is in the open configuration and the valve 174 is in the closed configuration (see for example Fig. 2) and when the first closed-loop arrangement is in the second operating condition the valve 172 is in the closed configuration and the valve 174 is in the open configuration (see for example Fig. 3).

According to the invention, with reference to Fig. 2, when the first closed-loop arrangement is in the first operating condition, the heat-storage fluid can flow from the first tank 145 to the first heat exchanger 131, the first heat exchanger 131 being configured to transfer heat from the second thermodynamic cycle arrangement to the first closed-loop arrangement, in particular from the first working fluid circulating in the second thermodynamic cycle arrangement to the heat-storage fluid of the first closed-loop arrangement; then the hot heat-storage fluid can flow from the first heat exchanger 131 to the second tank 155 and being stored in the second tank 155.

According to the invention, with reference to Fig. 3, , when the first closed-loop arrangement is in the second operating condition, the heat-storage fluid can flow from the second tank 155 to the second heat exchanger 132, the second heat exchanger 132 being configured to transfer heat from the first closed-loop arrangement to the third thermodynamic cycle arrangement, in particular from the heat-storage fluid of the first closed-loop arrangement to the second working fluid circulating the third thermodynamic cycle arrangement; then the cold heat-storage fluid can flow from the second heat exchanger 132 to the first tank 145 and being stored in the first tank 145.

It is to be noted that, according to the preferred embodiment shown in Fig. 1, the second thermodynamic cycle arrangement and the third thermodynamic cycle arrangement may share the first heat exchanger 131 and the second heat exchanger 132. Advantageously, with non-limiting reference to Fig. 2, when the first closed-loop cycle arrangement is in the first operating condition, the second heat exchanger 132 is configured to receive a first fluid stream, to transfer heat to the second thermodynamic cycle arrangement and to discharge the first fluid stream. Preferably, the first fluid stream is ambient air (or water). Advantageously, with non-limiting reference to Fig. 3, when the first closed-loop cycle arrangement is in the second operating condition, the first heat exchanger 131 is configured to receive a second fluid stream, to transfer heat from the third thermodynamic cycle arrangement and to discharge the second fluid stream. Preferably, the second fluid stream is ambient air (or water).

Advantageously, according to the preferred embodiment shown in Fig. 1, the second thermodynamic cycle arrangement comprises further a compressor 110 configured to generate a pressure increase upstream the heating of the heat-storage fluid, in particular upstream the first heat exchanger 131, and a throttle valve 112 configured to generate a pressure drop downstream the heating of the heat-storage fluid, in particular downstream the first heat exchanger 131. Preferably, the compressor 110 is configured to be mechanically couplable to an electric motor 111 arranged to consume the first electrical energy and transform electrical energy into mechanical energy, in particular to drive the compressor 110 during the first operating condition of the first closed-loop cycle arrangement.

Advantageously, according to the preferred embodiment shown in Fig. 1, the third thermodynamic cycle arrangement comprises further a pump 120 configured to generate a pressure increase downstream the cooling of the heat-storage fluid, in particular downstream the second heat exchanger 132, and an expander 122 configured to generate a pressure drop upstream the cooling of the heat-storage fluid, in particular upstream the second heat exchanger 132. Preferably, the expander 122 is configured to be mechanically couplable to an electric generator 121 arranged to transform mechanical energy into electrical energy and to produce the second electrical energy during the second operating condition of the first closed-loop cycle arrangement.

Preferably, the pump 120 may be coupled to a variable speed motor, not shown in the figure, which is the driver of the pump 120; advantageously, by varying the rotation speed of the pump 120, the flow and/or pressure of the first working fluid may be adjusted and therefore the second electrical energy, which is outlet from the system 100, may be regulated, for example to follow the energy requirements. Advantageously, the expander 122 is equipped with nozzle guide vanes (=NGV), not shown in the figure. configured to modify the vane angle of the first stages of the expander 122 when the pump 120 rotated at a different speed with respect to nominal speed; advantageously, by optimizing the vane angle of the first stages of the expander 122 the efficiency of the expander 122 is kept high.

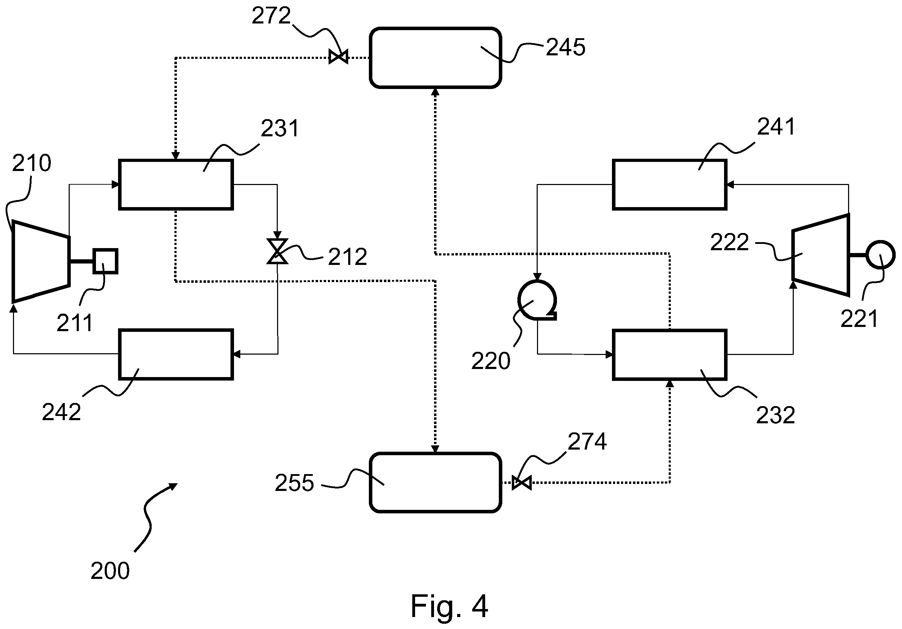

A second embodiment 200 of a system for storing and using thermal energy will be described in the following with the aid of Figure 4. It is to be noted that elements 210, 211, 212, 220, 221, 222, 231, 232, 245, 255, 272 and 274 in Fig. 4 may be identical or similar respectively to elements 110 (compressor), 111 (electric motor), 112 (throttle valve), 120 (pump), 121 (electric generator), 122 (expander), 131 (first heat exchanger), 132 (second heat exchanger), 145 (first tank), 155 (second tank), 172 (valve) and 174 (valve) in Fig. 1 and perform the same or similar functions.

It is to be noted that the system 200 of Fig. 4 is similar to the system 100 of Fig. 1. However, the system 200 of Fig. 4 differs from the system 100 of Fig. 1 in that the second thermodynamic cycle arrangement and the third thermodynamic cycle arrangement are not fluidly coupled and does not share any heat exchanger 231, 232. Due to that, the first working fluid that circulates in the second thermodynamic cycle arrangement and the second working fluid that circulates in the third thermodynamic cycle arrangement are distinct and advantageously different.

Preferably, the system 200 comprises further a third heat exchanger 242, in particular an evaporator, fluidly coupled to the second thermodynamic cycle arrangement, and a fourth heat exchanger 241, in particular a condenser, fluidly coupled to the third thermodynamic cycle arrangement. Advantageously, the third heat exchanger 242 is fluidly coupled to a third fluid stream and is configured to transfer heat from the third fluid stream to the second closed-loop cycle arrangement when the first closed-loop cycle arrangement is in the first operating condition. Preferably, the third fluid stream is ambient air. Advantageously, the fourth heat exchanger 241 is fluidly coupled to a fourth fluid stream and is configured to transfer heat from the third closed-loop cycle arrangement to the fourth fluid stream when the first closed-loop cycle arrangement is in the second operating condition. Preferably, the fourth fluid stream is ambient air.

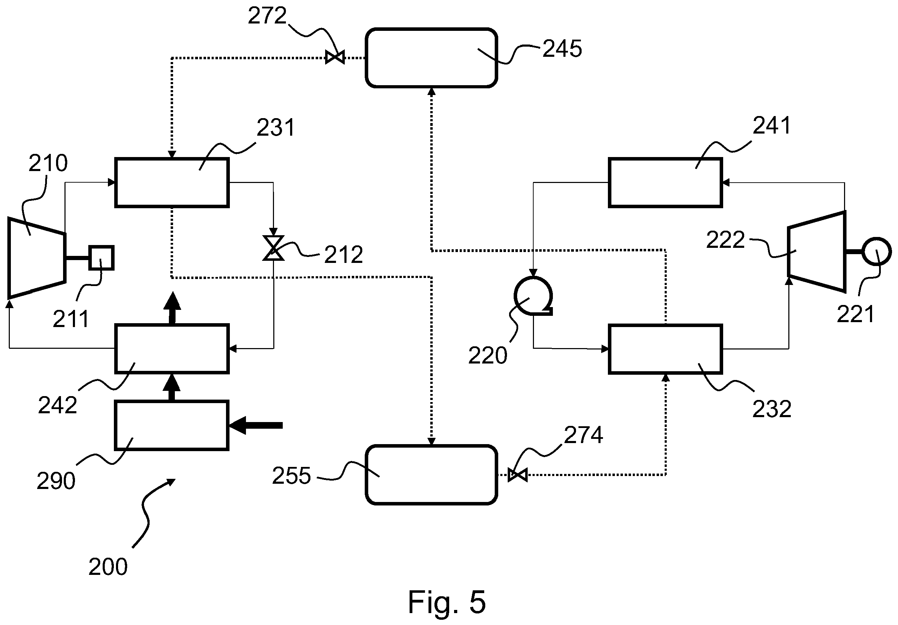

System 200 may comprise further a heat unit 290 configured to be fluidly coupled to the third heat exchanger 242 (see for example the variant of system 200 shown in Fig. 5). Advantageously, the heat unit 290 is configured to transfer heat to the third fluid stream when the first closed loop arrangement is in the first operating condition. The heat unit 290 is for example a solar unit or a geothermal unit or a waste heat recovery unit. In particular, the third fluid stream, preferably ambient air (or water), passes through the heat unit 290 and is heated by the heat unit 290, is sent to the third heat exchanger 242 and transfer heat to the second closed-loop cycle arrangement, in particular to the first working fluid circulating in the second closed-loop cycle arrangement, and finally the third fluid stream is discharged back in the ambient surrounding the third heat exchanger 242 (see the thick black arrows in Fig. 5).

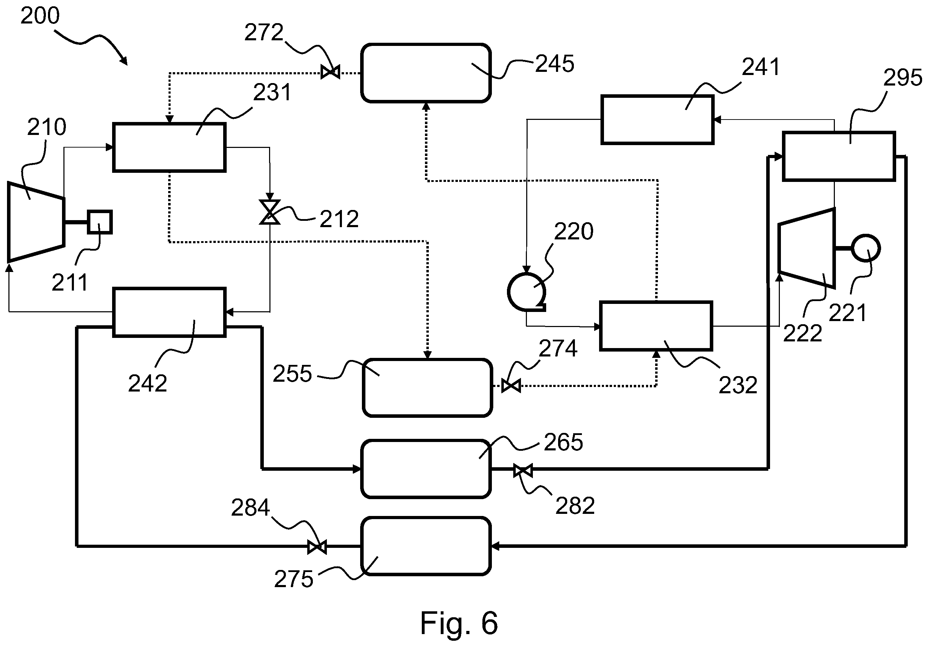

System 200 may comprise further a second closed loop cycle arrangement comprising a third tank 265 and a fourth tank 275 (see for example the variant of system 200 shown in Fig. 6). In particular, the third tank 265 is arranged to store second heat-storage fluid at a third temperature and the fourth tank is arranged to store second heat-storage fluid at a fourth temperature; advantageously, the fourth temperature is higher than the third temperature and lower than the second temperature; in other words, the fourth temperature is any temperature between the second temperature and the third temperature. For example, the fourth temperature could be around 200°C to 550°C and the third temperature could be around 80°C to 180°C. It is to be noted that the second closed loop cycle arrangement of Fig. 6 is configured to recover part of residual heat of the second working fluid discharged from the expander 222 and use it in the heat exchanger 242, in particular as an alternative fluid to ambient air or water.

Advantageously, with non-limiting reference to Fig. 6, the second closed-loop cycle arrangement is configured to flow second heat-storage fluid from the fourth tank 275 to the third tank 265 in a first operating condition and to flow second heat-storage fluid from the third tank 265 to the fourth tank 275 in a second operating condition. Preferably, the second closed-loop cycle arrangement is in the first operating condition when the first closed-loop cycle arrangement is in the first operating condition and the second closed-loop cycle arrangement is in the second operating condition when the first closed-loop cycle arrangement is in the second operating condition. Preferably, heat-storage fluid of the third tank 265 and heat-storage fluid of the fourth tank 275 are the same fluid. It is to be noted that the first heat-storage fluid and the second heat-storage fluid may be the same fluid or different fluids.

Advantageously, with non-limiting reference to Fig. 6, the second closed-loop cycle arrangement comprises further a third valve 282 and a fourth valve 284. In particular, the circulation of second heat-storage fluid between the third tank 265 and the fourth tank 275 is regulated by the third valve 282 and the fourth valve 284, which are configured to switch alternatively between an open configuration and a closed configuration. Advantageously, when the second closed-loop cycle arrangement in the first operating condition, the third tank 265 and the fourth tank 275 are fluidly coupled to the third heat exchanger 242; in particular, when the second closed-loop cycle arrangement in the first operating condition, the third valve 282 is in the closed configuration and the fourth valve 284 is in the open configuration. Preferably, when the fourth valve 284 is in the open configuration, the first closed-loop cycle arrangement is in the first operating condition.

System 200 may comprise further a fifth heat exchanger 295 configured to transfer heat from the third thermodynamic cycle arrangement to the second closed-loop cycle arrangement. Advantageously, when the second closed-loop cycle arrangement in the second operating condition, the third tank 265 and the fourth tank 275 are fluidly coupled to the fifth heat exchanger 295; in particular, when the second closed-loop cycle arrangement in the second operating condition, the third valve 282 is in the open configuration and the fourth valve 284 is in the closed configuration. Preferably, when the third valve 282 is in the open configuration, the first closed-loop cycle arrangement is in the second operating condition.

In other words, the fifth heat exchanger 295 helps to exploit part the residual thermal capacity of the second working fluid downstream the expander 222, which is transferred to the second closed-loop cycle arrangement, in particular to the second heat-storage fluid, instead of being transferred by the fourth heat exchanger 241 to the fourth fluid stream, in particular to ambient air or water.

## Claims

1. A system (100, 200) for storing and using thermal energy, the system comprising:
- a first closed-loop cycle arrangement comprising a first tank (145, 245) and a second tank (155, 255), wherein the first tank (145, 245) is arranged to store heat-storage fluid at a first temperature, wherein the second tank (155, 245) is arranged to store heat-storage fluid at a second temperature, the second temperature being higher than the first temperature, wherein the first closed-loop cycle arrangement is configured (172, 174, 272, 274) to flow heat-storage fluid from the first tank (145, 245) to the second tank (155, 255) in a first operating condition and to flow heat-storage fluid from the second tank (155, 255) to the first tank (145, 245) in a second operating condition;
- a second thermodynamic cycle arrangement configured to heat heat-storage fluid flowing from the first tank (145, 245) to the second tank (155, 255) by consuming first electrical energy, the electrical energy being input to the system (100, 200);
- a third thermodynamic cycle arrangement configured to produce second electrical energy by cooling heat-storage fluid flowing from the second tank (155, 255) to the first tank (145, 245), the second electrical energy being output from the system (100, 200),
wherein the second thermodynamic cycle arrangement comprises a first heat exchanger (131, 231) configured (172, 272) to be fluidly coupled to the first tank (145, 245) and the second tank (155, 255) to flow heat storage fluid from the first tank (145, 245) to the first heat exchanger (131, 231) then to the second tank (155, 255) when the first closed-loop cycle arrangement is in the first operating condition,
wherein the third thermodynamic cycle arrangement comprises a second heat exchanger (132, 232) configured (174, 274) to be fluidly coupled to the first tank (145, 245) and the second tank (155, 255) to flow heat storage fluid from the second tank (155, 255) to the second heat exchanger (132, 232) then to the first tank (145, 245) when the first closed-loop cycle arrangement is in the second operating condition.

2. The system (100) of claim 1, wherein the second thermodynamic cycle arrangement and the third thermodynamic cycle arrangement are fluidly coupled.

3. The system (100) of claim 2, wherein the second thermodynamic cycle arrangement and the third thermodynamic cycle arrangement share the first heat exchanger (131) and the second heat exchanger (132).

4. The system (100, 200) of claim 2,
wherein the first heat exchanger (131, 231) is configured to transfer heat from the second thermodynamic cycle arrangement to the first closed-loop cycle arrangement when the first closed-loop cycle arrangement is in the first operating condition, and
wherein the second heat exchanger (132, 232) is configured to transfer heat from the first closed-loop cycle arrangement to the third thermodynamic cycle arrangement when the first closed-loop cycle arrangement is in the second operating condition.

5. The system (100) of claim 2,
wherein the first heat exchanger (131) is configured to flow a first fluid stream and to transfer heat from the third thermodynamic cycle arrangement to the first fluid stream when the first closed-loop cycle arrangement is in the second operating condition, and
wherein the second heat exchanger (132) is configured to flow a second fluid stream and to transfer heat from the second fluid stream to the second thermodynamic cycle arrangement when the first closed-loop cycle arrangement is in the first operating condition.

6. The system (200) of claim 1, comprising further:
- a third heat exchanger (242) fluidly coupled to the second thermodynamic cycle arrangement, and
- a fourth heat exchanger (241) fluidly coupled to the third thermodynamic cycle arrangement;
wherein the third heat exchanger (242) is fluidly coupled to a third fluid stream and is configured to transfer heat from the third fluid stream to the second closed-loop cycle arrangement when the first closed-loop cycle arrangement is in the first operating condition, and
wherein the fourth heat exchanger (241) is fluidly coupled to a fourth fluid stream and is configured to transfer heat from the third closed-loop cycle arrangement to the fourth fluid stream when the first closed-loop cycle arrangement is in the second operating condition.

7. The system (100, 200) of claim 1, wherein the first closed-loop cycle arrangement comprises further a first valve (172, 272) and a second valve (174, 274), wherein the first valve (172, 272) and the second valve (174, 274) are configured to switch alternatively between an open configuration and a closed configuration;
wherein the first valve (172, 272) is in the open configuration and the second valve (174, 274) is in the closed configuration when the first closed-loop cycle arrangement is in the first operating condition, and
wherein the first valve (172, 272) is in the closed configuration and the second valve (174, 274) is in the open configuration when the first closed-loop cycle arrangement is in the second operating condition.

8. The system (100) of claim 1, wherein the second thermodynamic cycle arrangement and the third thermodynamic cycle arrangement are arranged to circulate a same working fluid.

9. The system (100, 200) of claim 1, wherein the second thermodynamic cycle arrangement further comprises:
- a compressor (110, 210) configured to generate a pressure increase upstream the heating of the heat-storage fluid;
- a throttle valve (112, 212) configured to generate a pressure drop downstream the heating of the heat-storage fluid;
wherein the compressor (110, 210) is configured to be mechanically couplable to an electric motor (111, 211) arranged to consume the first electrical energy and transform electrical energy into mechanical energy.

10. The system (100, 200) of claim 1, wherein the third thermodynamic cycle arrangement further comprises:
- a pump (120, 200) configured to generate a pressure increase downstream the cooling of the heat-storage fluid;
- an expander (122, 222) configured to generate a pressure drop upstream the cooling of the heat-storage fluid;
wherein the expander (122, 222) is configured to be mechanically couplable to an electric generator (121, 221) arranged to transform mechanical energy into electrical energy and to produce the second electrical energy.

11. The system (100) of claim 1, wherein the second thermodynamic cycle arrangement and the third thermodynamic cycle arrangement share a valve arrangement, wherein the valve arrangement comprises three-way valves (162, 164, 166, 168) arranged to switch the first closed-loop cycle arrangement between the first operating condition and the second operating condition.

12. The system (200) of claim 6, wherein comprising further a heat unit (290) configured to be fluidly coupled to the third heat exchanger (242), wherein the heat unit (290) is configured to transfer heat to the third fluid stream when the first closed loop arrangement is in the first operating condition.

13. The system (200) of claim 6, comprising further a second closed loop cycle arrangement comprising a third tank (265) and a fourth tank (275), wherein the third tank (265) is arranged to store another heat-storage fluid at a third temperature, wherein the fourth tank (275) is arranged to store another heat-storage fluid at a fourth temperature, the fourth temperature being higher than the third temperature, the fourth temperature being lower than the second temperature,
wherein the first closed-loop cycle arrangement is configured to flow another heat-storage fluid from the fourth tank (275) to the third tank (265) in a first operating condition and to flow another heat-storage fluid from the third tank (265) to the fourth tank (275) in a second operating condition;
wherein the third tank (265) and the fourth tank (275) are fluidly coupled to the third heat exchanger (242) when the second closed-loop cycle arrangement is in the first operating condition.

14. The system (200) of claim 13, comprising further a fifth heat exchanger (295),
wherein the fifth heat exchanger (295) is configured to transfer heat from the third thermodynamic cycle arrangement to the second closed loop cycle arrangement, and
wherein the third tank (265) and the fourth tank (275) are fluidly coupled to the fifth heat exchanger (295) when the second closed-loop cycle arrangement is in the second operating condition.

## Patentansprüche

1. System (100, 200) zum Speichern und Verwenden thermischer Energie, das System umfassend:
- eine erste Anordnung mit geschlossenem Kreislauf, umfassend einen ersten Tank (145, 245) und einen zweiten Tank (155, 255), wobei der erste Tank (145, 245) angeordnet ist, um Wärmespeicherfluid bei einer ersten Temperatur zu speichern, wobei der zweite Tank (155, 245) angeordnet ist, um Wärmespeicherfluid bei einer zweiten Temperatur zu speichern, wobei die zweite Temperatur höher als die erste Temperatur ist, wobei die erste Anordnung mit geschlossenem Kreislauf konfiguriert (172, 174, 272, 274) ist, um Wärmespeicherfluid von dem ersten Tank (145, 245) zu dem zweiten Tank (155, 255) in einem ersten Betriebszustand fließen zu lassen und um Wärmespeicherfluid von dem zweiten Tank (155, 255) zu dem ersten Tank (145, 245) in einem zweiten Betriebszustand fließen zu lassen;
- eine zweite Anordnung mit thermodynamischem Kreislauf, die konfiguriert ist, um Wärmespeicherfluid, das von dem ersten Tank (145, 245) zu dem zweiten Tank (155, 255) fließt, durch Verbrauchen erster elektrischer Energie zu erwärmen, wobei die elektrische Energie dem System (100, 200) zugeführt wird;
- eine dritte Anordnung mit thermodynamischem Kreislauf, die konfiguriert ist, um zweite elektrische Energie durch Kühlen von Wärmespeicherfluid, das von dem zweiten Tank (155, 255) zu dem ersten Tank (145, 245) fließt zu erzeugen, wobei die zweite elektrische Energie von dem System (100, 200) abgeführt wird,
wobei die zweite Anordnung mit thermodynamischem Kreislauf einen ersten Wärmetauscher (131, 231) umfasst, der konfiguriert (172, 272) ist, um mit dem ersten Tank (145, 245) und den zweiten Tank (155, 255) fluidisch gekoppelt zu sein, um Wärmespeicherfluid von dem ersten Tank (145, 245) zu dem ersten Wärmetauscher (131, 231) dann zu dem zweiten Tank (155, 255) fließen zu lassen, wenn die erste Anordnung mit geschlossenem Kreislauf in dem ersten Betriebszustand ist,
wobei die dritte Anordnung mit thermodynamischem Kreislauf einen zweiten Wärmetauscher (132, 232) umfasst, der konfiguriert (174, 274) ist, um mit dem ersten Tank (145, 245) und den zweiten Tank (155, 255) fluidisch gekoppelt zu sein, um Wärmespeicherfluid von dem zweiten Tank (155, 255) zu dem zweiten Wärmetauscher (132, 232) dann zu dem ersten Tank (145, 245) fließen zu lassen, wenn die erste Anordnung mit geschlossenem Kreislauf in dem zweiten Betriebszustand ist.

2. System (100) nach Anspruch 1, wobei die zweite Anordnung mit thermodynamischem Kreislauf und die dritte Anordnung mit thermodynamischem Kreislauf fluidisch gekoppelt sind.

3. System (100) nach Anspruch 2, wobei die zweite Anordnung mit thermodynamischem Kreislauf und die dritte Anordnung mit thermodynamischem Kreislauf den ersten Wärmetauscher (131) und den zweiten Wärmetauscher (132) gemeinsam nutzen.

4. System (100, 200) nach Anspruch 2,
wobei der erste Wärmetauscher (131, 231) konfiguriert ist, um Wärme von der zweiten Anordnung mit thermodynamischem Kreislauf zu der ersten Anordnung mit geschlossenem Kreislauf zu übertragen, wenn die erste Anordnung mit geschlossenem Kreislauf in dem ersten Betriebszustand ist, und
wobei der zweite Wärmetauscher (132, 232) konfiguriert ist, um Wärme von der ersten Anordnung mit geschlossenem Kreislauf zu der dritten Anordnung mit thermodynamischem Kreislauf zu übertragen, wenn die erste Anordnung mit geschlossenem Kreislauf in dem zweiten Betriebszustand ist.

5. System (100) nach Anspruch 2,
wobei der erste Wärmetauscher (131) konfiguriert ist, um einen ersten Fluidstrom fließen zu lassen und um Wärme von der dritten Anordnung mit thermodynamischem Kreislauf zu dem ersten Fluidstrom zu übertragen, wenn die erste Anordnung mit geschlossenem Kreislauf in dem zweiten Betriebszustand ist, und
wobei der zweite Wärmetauscher (132) konfiguriert ist, um einen zweiten Fluidstrom fließen zu lassen und um Wärme von dem zweiten Fluidstrom zu der zweiten Anordnung mit thermodynamischem Kreislauf zu übertragen, wenn die erste Anordnung mit geschlossenem Kreislauf in dem ersten Betriebszustand ist.

6. System (200) nach Anspruch 1, umfassend ferner:
- einen dritten Wärmetauscher (242), der mit der zweiten Anordnung mit thermodynamischem Kreislauf fluidisch gekoppelt ist, und
- einen vierten Wärmetauscher (241), der mit der dritten Anordnung mit thermodynamischem Kreislauf fluidisch gekoppelt ist;
wobei der dritte Wärmetauscher (242) mit einem dritten Fluidstrom fluidisch gekoppelt ist und konfiguriert ist, um Wärme von dem dritten Fluidstrom zu der zweiten Anordnung mit geschlossenem Kreislauf zu übertragen, wenn die erste Anordnung mit geschlossenem Kreislauf in dem ersten Betriebszustand ist, und
wobei der vierte Wärmetauscher (241) mit einem vierten Fluidstrom fluidisch gekoppelt ist und konfiguriert ist, um Wärme von der dritten Anordnung mit geschlossenem Kreislauf zu dem vierten Fluidstrom zu übertragen, wenn die erste Anordnung mit geschlossenem Kreislauf in dem zweiten Betriebszustand ist.

7. System (100, 200) nach Anspruch 1, wobei die erste Anordnung mit geschlossenem Kreislauf ferner ein erstes Ventil (172, 272) und ein zweites Ventil (174, 274) umfasst, wobei das erste Ventil (172, 272) und das zweite Ventil (174, 274) konfiguriert sind, um zwischen einer offenen Konfiguration und einer geschlossenen Konfiguration alternativ zu wechseln;
wobei das erste Ventil (172, 272) in der offenen Konfiguration ist und das zweite Ventil (174, 274) in der geschlossenen Konfiguration ist, wenn die erste Anordnung mit geschlossenem Kreislauf in dem ersten Betriebszustand ist, und
wobei das erste Ventil (172, 272) in der geschlossenen Konfiguration ist und das zweite Ventil (174, 274) in der offenen Konfiguration ist, wenn die erste Anordnung mit geschlossenem Kreislauf in dem zweiten Betriebszustand ist.

8. System (100) nach Anspruch 1, wobei die zweite Anordnung mit thermodynamischem Kreislauf und die dritte Anordnung mit thermodynamischem Kreislauf angeordnet sind, um ein selbes Arbeitsfluid zirkulieren zu lassen.

9. System (100, 200) nach Anspruch 1, wobei die zweite Anordnung mit thermodynamischem Kreislauf ferner umfasst:
- einen Kompressor (110, 210), der konfiguriert ist, um eine Druckerhöhung stromaufwärts der Erwärmung des Wärmespeicherfluids zu generieren;
- ein Drosselventil (112, 212), das konfiguriert ist, um einen Druckabfall stromabwärts der Erwärmung des Wärmespeicherfluids zu generieren;
wobei der Kompressor (110, 210) konfiguriert ist, um mit einem Elektromotor (111, 211), der angeordnet ist, um die erste elektrische Energie zu verbrauchen und elektrische Energie in mechanische Energie umzuwandeln, mechanisch koppelbar zu sein.

10. System (100, 200) nach Anspruch 1, wobei die dritte Anordnung mit thermodynamischem Kreislauf ferner umfasst:
- eine Pumpe (120, 200), die konfiguriert ist, um eine Druckerhöhung stromabwärts der Kühlung des Wärmespeicherfluids zu generieren;
- einen Expander (122, 222), der konfiguriert ist, um einen Druckabfall stromaufwärts der Kühlung des Wärmespeicherfluids zu generieren;
wobei der Expander (122, 222) konfiguriert ist, um mit einem Elektrogenerator (121, 221), der angeordnet ist, um mechanische Energie in elektrische Energie umzuwandeln und um die zweite elektrische Energie zu erzeugen, mechanisch koppelbar zu sein.

11. System (100) nach Anspruch 1, wobei die zweite Anordnung mit thermodynamischem Kreislauf und die dritte Anordnung mit thermodynamischem Kreislauf eine Ventilanordnung gemeinsam nutzen, wobei die Ventilanordnung Dreiwegeventile (162, 164, 166, 168), die angeordnet sind, um die erste Anordnung mit geschlossenem Kreislauf zwischen dem ersten Betriebszustand und dem zweiten Betriebszustand wechseln zu lassen, umfasst.

12. System (200) nach Anspruch 6, wobei umfassend ferner eine Wärmeeinheit (290), die konfiguriert ist, um mit dem dritten Wärmetauscher (242) fluidisch gekoppelt zu sein, wobei die Wärmeeinheit (290) konfiguriert ist, um Wärme zu dem dritten Fluidstrom zu übertragen, wenn die erste Anordnung mit geschlossenem Kreislauf in dem ersten Betriebszustand ist.

13. System (200) nach Anspruch 6, umfassend ferner eine zweite Anordnung mit geschlossenem Kreislauf, umfassend einen dritten Tank (265) und einem vierten Tank (275), wobei der dritte Tank (265) angeordnet ist, um ein weiteres Wärmespeicherfluid bei einer dritten Temperatur zu speichern, wobei der vierte Tank (275) angeordnet ist, um ein weiteres Wärmespeicherfluid bei einer vierten Temperatur zu speichern, wobei die vierte Temperatur höher als die dritte Temperatur ist, wobei die vierte Temperatur niedriger als die zweite Temperatur ist,
wobei die erste Anordnung mit geschlossenem Kreislauf konfiguriert ist, um ein weiteres Wärmespeicherfluid von dem vierten Tank (275) zu dem dritten Tank (265) in einem ersten Betriebszustand fließen zu lassen und um ein weiteres Wärmespeicherfluid von dem dritten Tank (265) zu dem vierten Tank (275) in einem zweiten Betriebszustand fließen zu lassen;
wobei der dritte Tank (265) und der vierte Tank (275) mit dem dritten Wärmetauscher (242) fluidisch gekoppelt sind, wenn die zweite Anordnung mit geschlossenem Kreislauf in dem ersten Betriebszustand ist.

14. System (200) nach Anspruch 13, umfassend ferner einen fünften Wärmetauscher (295),
wobei der fünfte Wärmetauscher (295) konfiguriert ist, um Wärme von der dritten Anordnung mit thermodynamischem Kreislauf zu der zweiten Anordnung mit geschlossenem Kreislauf zu übertragen, und
wobei der dritte Tank (265) und der vierte Tank (275) mit dem fünften Wärmetauscher (295) fluidisch gekoppelt sind, wenn die zweite Anordnung mit geschlossenem Kreislauf in dem zweiten Betriebszustand ist.

## Revendications

1. Système (100, 200) pour le stockage et l'utilisation d'énergie thermique, le système comprenant :
- un premier agencement à cycle en boucle fermée comprenant un premier réservoir (145, 245) et un deuxième réservoir (155, 255), dans lequel le premier réservoir (145, 245) est agencé pour stocker un fluide de stockage de chaleur à une première température, dans lequel le deuxième réservoir (155, 245) est agencé pour stocker un fluide de stockage de chaleur à une deuxième température, la deuxième température étant supérieure à la première température, dans lequel le premier agencement à cycle en boucle fermée est conçu (172, 174, 272, 274) pour faire s'écouler un fluide de stockage de chaleur du premier réservoir (145, 245) au deuxième réservoir (155, 255) dans un premier état de fonctionnement et pour faire s'écouler un fluide de stockage de chaleur du deuxième réservoir (155, 255) au premier réservoir (145, 245) dans un second état de fonctionnement ;
- un deuxième agencement à cycle thermodynamique conçu pour chauffer le fluide de stockage de chaleur s'écoulant du premier réservoir (145, 245) au deuxième réservoir (155, 255) en consommant une première énergie électrique, l'énergie électrique étant entrée dans le système (100, 200) ;
- un troisième agencement à cycle thermodynamique conçu pour produire une seconde énergie électrique en refroidissant un fluide de stockage de chaleur s'écoulant du deuxième réservoir (155, 255) au premier réservoir (145, 245), la seconde énergie électrique étant délivrée par le système (100, 200),
dans lequel le deuxième agencement à cycle thermodynamique comprend un premier échangeur de chaleur (131, 231) conçu (172, 272) pour être accouplé fluidiquement au premier réservoir (145, 245) et au deuxième réservoir (155, 255) afin de faire s'écouler du fluide de stockage de chaleur du premier réservoir (145, 245) au premier échangeur de chaleur (131, 231) puis au deuxième réservoir (155, 255) lorsque le premier agencement à cycle en boucle fermée est dans le premier état de fonctionnement,
dans lequel le troisième agencement à cycle thermodynamique comprend un deuxième échangeur de chaleur (132, 232) conçu (174, 274) pour être accouplé fluidiquement au premier réservoir (145, 245) et au deuxième réservoir (155, 255) pour faire s'écouler du fluide de stockage de chaleur du deuxième réservoir (155, 255) au deuxième échangeur de chaleur (132, 232) puis au premier réservoir (145, 245) lorsque le premier agencement à cycle en boucle fermée est dans le second état de fonctionnement.

2. Système (100) selon la revendication 1, dans lequel le deuxième agencement à cycle thermodynamique et le troisième agencement à cycle thermodynamique sont accouplés fluidiquement.

3. Système (100) selon la revendication 2, dans lequel le deuxième agencement à cycle thermodynamique et le troisième agencement à cycle thermodynamique partagent le premier échangeur de chaleur (131) et le deuxième échangeur de chaleur (132).

4. Système (100, 200) selon la revendication 2,
dans lequel le premier échangeur de chaleur (131, 231) est conçu pour transférer de la chaleur du deuxième agencement à cycle thermodynamique au premier agencement à cycle en boucle fermée lorsque le premier agencement à cycle en boucle fermée est dans le premier état de fonctionnement, et
dans lequel le deuxième échangeur de chaleur (132, 232) est conçu pour transférer de la chaleur du premier agencement à cycle en boucle fermée au troisième agencement à cycle thermodynamique lorsque le premier agencement à cycle en boucle fermée est dans le second état de fonctionnement.

5. Système (100) selon la revendication 2,
dans lequel le premier échangeur de chaleur (131) est conçu pour faire s'écouler un premier courant de fluide et pour transférer de la chaleur du troisième agencement à cycle thermodynamique au premier courant de fluide lorsque le premier agencement à cycle en boucle fermée est dans le second état de fonctionnement, et
dans lequel le deuxième échangeur de chaleur (132) est conçu pour faire s'écouler un deuxième courant de fluide et pour transférer la chaleur du deuxième courant de fluide au deuxième agencement à cycle thermodynamique lorsque le premier agencement à cycle en boucle fermée est dans le premier état de fonctionnement.

6. Système (200) selon la revendication 1 comprenant en outre :
- un troisième échangeur de chaleur (242) accouplé fluidiquement au deuxième agencement à cycle thermodynamique, et
- un quatrième échangeur de chaleur (241) accouplé fluidiquement au troisième agencement à cycle thermodynamique ;
dans lequel le troisième échangeur de chaleur (242) est accouplé fluidiquement à un troisième courant de fluide et est conçu pour transférer la chaleur du troisième courant de fluide au deuxième agencement à cycle en boucle fermée lorsque le premier agencement à cycle en boucle fermée est dans le premier état de fonctionnement, et
dans lequel le quatrième échangeur de chaleur (241) est accouplé fluidiquement à un quatrième courant de fluide et est conçu pour transférer la chaleur du troisième agencement à cycle en boucle fermée au quatrième courant de fluide lorsque le premier agencement à cycle en boucle fermée est dans le second état de fonctionnement.

7. Système (100, 200) selon la revendication 1, dans lequel le premier agencement à cycle en boucle fermée comprend en outre une première vanne (172, 272) et une seconde vanne (174, 274), dans lequel la première vanne (172, 272) et la seconde vanne (174, 274) sont conçues pour commuter alternativement entre une configuration ouverte et une configuration fermée ;
dans lequel la première vanne (172, 272) est dans la configuration ouverte et la seconde vanne (174, 274) est dans la configuration fermée lorsque le premier agencement à cycle en boucle fermée est dans le premier état de fonctionnement, et
dans lequel la première vanne (172, 272) est dans la configuration fermée et la seconde vanne (174, 274) est dans la configuration ouverte lorsque le premier agencement à cycle en boucle fermée est dans le second état de fonctionnement.

8. Système (100) selon la revendication 1, dans lequel le deuxième agencement à cycle thermodynamique et le troisième agencement à cycle thermodynamique sont agencés pour faire s'écouler un même fluide de travail.

9. Système (100, 200) selon la revendication 1, dans lequel le deuxième agencement à cycle thermodynamique comprend en outre :
- un compresseur (110, 210) conçu pour générer une augmentation de pression en amont du chauffage du fluide de stockage de chaleur ;
- une vanne d'étranglement (112, 212) conçue pour générer une chute de pression en aval du chauffage du fluide de stockage de chaleur ;
dans lequel le compresseur (110, 210) est conçu pour être accouplé mécaniquement à un moteur électrique (111, 211) agencé pour consommer la première énergie électrique et transformer l'énergie électrique en énergie mécanique.

10. Système (100, 200) selon la revendication 1, dans lequel le troisième agencement à cycle thermodynamique comprend en outre :
- une pompe (120, 200) conçue pour générer une augmentation de pression en aval du refroidissement du fluide de stockage de chaleur ;
- un détendeur (122, 222) conçu pour générer une chute de pression en amont du refroidissement du fluide de stockage de chaleur ;
dans lequel le détendeur (122, 222) est conçu pour être accouplé mécaniquement à un générateur électrique (121, 221) agencé pour transformer de l'énergie mécanique en énergie électrique et pour produire la seconde énergie électrique.

11. Système (100) selon la revendication 1, dans lequel le deuxième agencement à cycle thermodynamique et le troisième agencement à cycle thermodynamique partagent un agencement de vannes, dans lequel l'agencement de vannes comprend des vannes à trois voies (162, 164, 166, 168) agencées pour commuter le premier agencement à cycle en boucle fermée entre le premier état de fonctionnement et le second état de fonctionnement.

12. Système (200) selon la revendication 6, dans lequel comprenant en outre une unité de chaleur (290) conçue pour être accouplée fluidiquement au troisième échangeur de chaleur (242), dans lequel l'unité de chaleur (290) est conçue pour transférer de la chaleur au troisième courant de fluide lorsque le premier agencement en boucle fermée est dans le premier état de fonctionnement.

13. Système (200) selon la revendication 6, comprenant en outre un deuxième agencement à cycle en boucle fermée comprenant un troisième réservoir (265) et un quatrième réservoir (275), dans lequel le troisième réservoir (265) est agencé pour stocker un autre fluide de stockage de chaleur à une troisième température, dans lequel le quatrième réservoir (275) est agencé pour stocker un autre fluide de stockage de chaleur à une quatrième température, la quatrième température étant supérieure à la troisième température, la quatrième température étant inférieure à la deuxième température,
dans lequel le premier agencement à cycle en boucle fermée est conçu pour faire s'écouler un autre fluide de stockage de chaleur du quatrième réservoir (275) au troisième réservoir (265) dans un premier état de fonctionnement et pour faire s'écouler un autre fluide de stockage de chaleur du troisième réservoir (265) au quatrième réservoir (275) dans un second état de fonctionnement ;
dans lequel le troisième réservoir (265) et le quatrième réservoir (275) sont accouplés fluidiquement au troisième échangeur de chaleur (242) lorsque le deuxième agencement à cycle en boucle fermée est dans le premier état de fonctionnement.

14. Système (200) selon la revendication 13, comprenant en outre un cinquième échangeur de chaleur (295),
dans lequel le cinquième échangeur de chaleur (295) est conçu pour transférer la chaleur du troisième agencement à cycle thermodynamique au deuxième agencement à cycle en boucle fermée, et
dans lequel le troisième réservoir (265) et le quatrième réservoir (275) sont accouplés fluidiquement au cinquième échangeur de chaleur (295) lorsque le deuxième agencement à cycle en boucle fermée est dans le second état de fonctionnement.
